# FASCICULE DE BREVET EUROPEEN

(11) **EP 2 582 622 B1**
(45) Date de publication et mention de la délivrance du brevet: **02.04.2014**
(21) Numéro de dépôt: 11729759.8
(22) Date de dépôt: 15.06.2011
(51) Int. Cl.: C01B 15/037, C01B 33/26

(54) **UTILISATION DE NANOPARTICULES POUR LE STOCKAGE "SEC" LONGUE DUREE DE RADICAUX PEROXYDES**
VERWENDUNG VON NANOPARTIKELN FÜR DIE LANGZEIT-TROCKENLAGERUNG VON PEROXIDRADIKALEN
USE OF NANOPARTICLES FOR THE LONG-TERM "DRY" STORAGE OF PEROXIDE RADICALS

(30) Priorité: 16.06.2010 FR 1002542
(43) Date de publication de la demande: 24.04.2013
(73) Titulaire: Commissariat à l'Énergie Atomique et aux Énergies Alternatives, 75015 Paris (FR)
(72) Inventeur: PONCELET, Olivier, F-38000 Grenoble (FR); JOUHANNAUD, Julien, F-89710 Volgre (FR)
(74) Mandataire: Noel, Chantal Odile
(86) Numéro de dépôt international: PCT/IB2011/052594
(87) Numéro de publication internationale: WO 2011/158188

(56) Documents cités:
- EP-A1- 1 544 169
- WO-A2-2005/070377
- KR-A- 20040 008 104
- HORIKAWA, YUKIYA ET AL: "Sedimentation behavior of dispersed particles of clay and silt in acidic and alkaline suspensions of inorganic materials from various volcanic ash soils", SOIL SCIENCE AND PLANT NUTRITION (TOKYO, JAPAN) , 50(1), 19-25 CODEN: SSPNAW; ISSN: 0038-0768, 2004, XP002616947,
- COOPER A B ET AL: "Interactions between Escherichia coli and allophane-I. Adsorption", SOIL BIOLOGY AND BIOCHEMISTRY, PERGAMON, OXFORD, GB, vol. 11, no. 3, 1 janvier 1979 (1979-01-01), pages 221-226, XP023671772, ISSN: 0038-0717, DOI: DOI:10.1016/0038-0717(79)90065-8 [extrait le 1979-01-01]

## Description

L'invention concerne l'utilisation de particules d'un polymère d'aluminosilicate du type imogolite et/ou allophane en tant qu'agent de stabilisation à l'air des ions peroxydes.

Elle concerne également un procédé de stabilisation à l'air des ions peroxydes ainsi que le substrat obtenu par ce procédé.

Enfin, elle concerne un dispositif, en particulier un échangeur thermique, comprenant un substrat selon l'invention.

Les radicaux (ions) peroxydes sont connus comme étant très réactifs et capables d'oxyder de nombreux composés.

C'est pourquoi ils sont utilisés en particulier en tant qu'agents antibactérien et également pour réaliser de nombreuses réactions d'oxydation.

Cependant, ces radicaux peroxydes ne peuvent exister qu'en équilibre en solution.

Mais, dès que le milieu est ouvert, c'est-à-dire en contact avec l'air, la réaction de dismutation commence selon les réactions suivantes :

H₂O₂ + 2H⁺ + 2e⁻ = 2H₂O (où H₂O₂ est l'oxydant)

H₂O₂ = O₂ + 2H⁺ + 2e⁻ (où H₂O₂ est le réducteur)

2 H₂O₂ → 2 H₂O + O₂

Le dégagement d'oxygène déplaçant l'équilibre, rapidement, les radicaux peroxydes disparaissent.

La cinétique du phénomène de dismutation peut être fortement augmentée par la présence de certains contaminants chimiques présents à la surface du contenant.

Ainsi, jusqu'à présent il était impossible de conserver des ions peroxydes disponibles à la surface d'un matériau en milieu ouvert.

Par ailleurs, on connait les polymères d'aluminosilicates du type imogolite ou du type allophane.

Ces polymères d'aluminosilicates sont connus sous différentes formes.

On connaît par exemple des polymères d'aluminosilicate sous forme fibreuse, tels que l'imogolite.

L'imogolite est un aluminosilicate filamenteux, tubulaire, existant à l'état naturel dans les cendres volcaniques et dans certains sols.

L'imogolite naturel est impur et est mélangé avec d'autres aluminosilicates tels que les allophanes et/ou de la boéhmite.

Cependant, à l'état naturel, c'est un produit impur qui ne peut donc pas être utilisé dans des applications d'agent antibactérien ou d'agent oxydant dans des réactions nécessitant une grande pureté.

Il existe différents procédés de synthèse d'imogolite à des degrés plus ou moins purs. Par exemple, les brevets de Farmer US 4,152,404 et 4,252,779 décrivent un procédé de préparation d'un matériau inorganique analogue à l'imogolite naturel.

L'imogolite obtenu est débarrassé des charges, telles que les sels par dialyse. Cependant, cette technique ne permet pas d'éliminer les allophanes qui ne portent pas de charges.

Par ailleurs, WADA et al., dans Journal of Sol Science , 1979, 30, 347, décrivent un imogolite pur présentant un rapport molaire Al/Si proche de 2. Il est précisé ici que les termes "degré de pureté très élevé" ou " haut degré de pureté" désignent une solution aqueuse contenant au moins 80%, et de préférence au moins 90%, en masse d'imogolite.

Le brevet européen 0 741668 décrit un procédé long et précis pour obtenir de l'imogolite présentant un degré de pureté élevé. Notamment, il est absolument nécessaire, au cours de l'étape de digestion ou de croissance des filaments, de maintenir le pH et la concentration en Al+Si dans des intervalles de valeurs bien précis. En cas de synthèse non contrôlée, on observe la formation de gels de silice, de boéhmite ou d'allophanes. La boéhmite présente une structure non fibreuse, avec un rapport molaire Al:Si supérieur à 4.

Ainsi, lorsque la synthèse n'a pas été suffisamment contrôlée, l'imogolite obtenu n'est pas suffisamment pur pour des applications d'agent antibactérien ou d'agent oxydant dans des réactions nécessitant une grande pureté.

La demande de brevet français 2 817 488 décrit un procédé permettant d'obtenir un polymère d'aluminosilicate du type imogolite de haute pureté utilisable dans la formulation de matériaux polymériques par purification d'une dispersion aqueuse d'un mélange de particules colloïdales d'aluminosilicates obtenu selon le procédé décrit dans le brevet européen 0 741 668. Ainsi, on purifie le mélange de particules colloïdales par ultrafiltration pour obtenir dans le retentât un aluminosilicate polymère fibreux, du type imogolite, présentant un rapport molaire Al/Si compris entre 1,8 et 2,5. De préférence, l'ultrafiltration est une ultrafiltration tangentielle, également de préférence, en utilisant une membrane à base de polyéthersulfone. De préférence, le flux laminaire en retentât est sensiblement égal à 1 L.min⁻¹ pour une surface de membrane de 1 m². On peut également pré-filtrer le mélange de particules avant de réaliser l'étape d'ultrafiltration.

La demande de brevet français 2 802 912 décrit un procédé pour préparer un polymère d'aluminosilicate du type imogolite de haute pureté.

Ce procédé comprend les étapes suivantes :
a) on traite un alcoxyde mixte de silicium et d'aluminium, ou un précurseur d'un composé mixte d'aluminium et de silicium, avec un alcali aqueux, à un pH entre 4,5 et 6,5, inclus, en maintenant la concentration molaire en aluminium entre 5.10⁻⁴ et 10⁻² mol.L⁻¹, inclus, et le rapport Al/Si molaire entre 1 et 3, inclus, en présence de groupes silanol,
b) on effectue une étape de maturation à température ambiante, de préférence pendant une durée comprise entre 5 et 15 jours, inclus, le plus préférablement pendant une durée comprise entre 8 et 10 jours, inclus,
c) on chauffe le mélange obtenu à l'étape a) à une température inférieure à 100°C, de préférence à une température de 96-98°C pendant 24 heures,
d) on élimine les ions résiduels du mélange obtenu à l'étape c), par exemple par ultrafiltration.

Les détails de ce procédé sont donnés dans la demande de brevet français 2 802 912.

Ainsi, dans le texte qui précède et qui suit, les termes "polymère(s) d'aluminosilicate du type imogolite purs" désignent les polymères d'aluminosilicate obtenus par les procédés décrits dans la demande de brevet français 2 817 488 et la demande de brevet français 2 802 912, et sont ceux utilisés dans l'invention lorsqu'une grande pureté est nécessaire, en particulier lorsque l'application est une application antibactérienne ou pour des réactions d'oxydation par lesquelles ont veut obtenir des produits de haute pureté.

On connaît également des polymères d'aluminosilicate sous forme de particules sphériques, tels que les allophanes.

Comme on l'a dit précédemment, les allophanes existent également à l'état naturel en combinaison avec l'imogolite naturel.

Cependant, à l'état naturel c'est un produit impur qui ne peut donc pas être utilisé dans des applications d'agent antibactérien et d'agent oxydant dans des réactions nécessitant une grande pureté.

La demande de brevet US-A-6,254,845 décrit un procédé de préparation de sphères creuses de polymères d'aluminosilicate du type allophane. Cependant, le polymère d'aluminosilicate obtenu contient, en raison du procédé de fabrication utilisé, une forte proportion du sel utilisé pour le former.

La demande de brevet français 2 842 514 décrit un procédé pour préparer un polymère d'aluminosilicate du type imogolite ou du type allophane, très pur, pouvant être utilisé pour la formulation de nombreux matériaux polymériques.

Ce procédé consiste à :
a) traiter un alcoxyde mixte d'aluminium et de silicium ne comportant que des fonctions hydrolysables (c'est-à-dire ne comportant que des substituants éliminés par hydrolyse au cours du procédé, et en particulier à l'occasion du traitement avec un alcali aqueux), ou un précurseur mixte d'aluminium et de silicium obtenu par hydrolyse d'un mélange de composés d'aluminium et de composés de silicium ne comportant que des fonctions hydrolysables, avec un alcali aqueux, en présence de groupes silanol, la concentration en aluminium étant maintenue inférieure à 0,3 mol.L⁻¹, le rapport Al/Si molaire étant maintenu entre 1 et 3,6 et le rapport molaire alcali/Al étant maintenu entre 2,3 et 3,
b) agiter le mélange obtenu à température ambiante en présence de groupes silanol pendant une durée suffisante pour former le polymère d'aluminosilicate, et enfin
c) éliminer du milieu réactionnel les sous-produits formés au cours des étapes précédentes. L'élimination des sous-produits peut être effectuée par différents procédés connus en soi, tels qu'un lavage ou une diafiltration ou encore une ultrafiltration, de préférence une ultrafiltration tangentielle.

Les détails de ce procédé sont donnés dans la demande de brevet français 2 842 514.

Le polymère d'aluminosilicate du type imogolite ou du type allophane obtenu est caractérisé par un spectre Raman comprenant, dans la zone spectrale 200-600 cm⁻¹, une large bande située à 250 ± 5 cm⁻¹, une bande large et intense située à 359 ± 4 cm⁻¹, un épaulement situé à 407 ±7 cm⁻¹, et une bande située à 501 ± 2 cm⁻¹, le spectre Raman étant réalisé sur le matériau obtenu juste avant l'étape d'élimination du milieu réactionnel des sous-produits formés au cours des étapes a) et b).

La demande de brevet français 2 842 514 décrit ce procédé et les conditions d'obtention du spectre Raman.

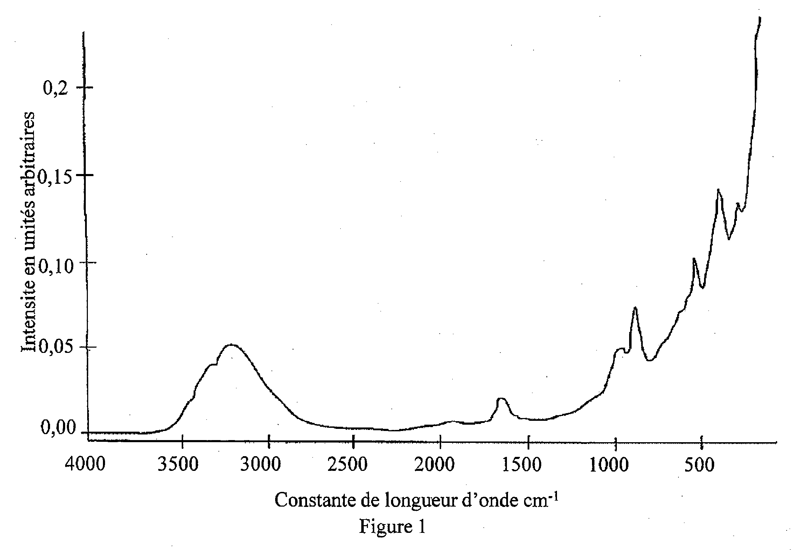

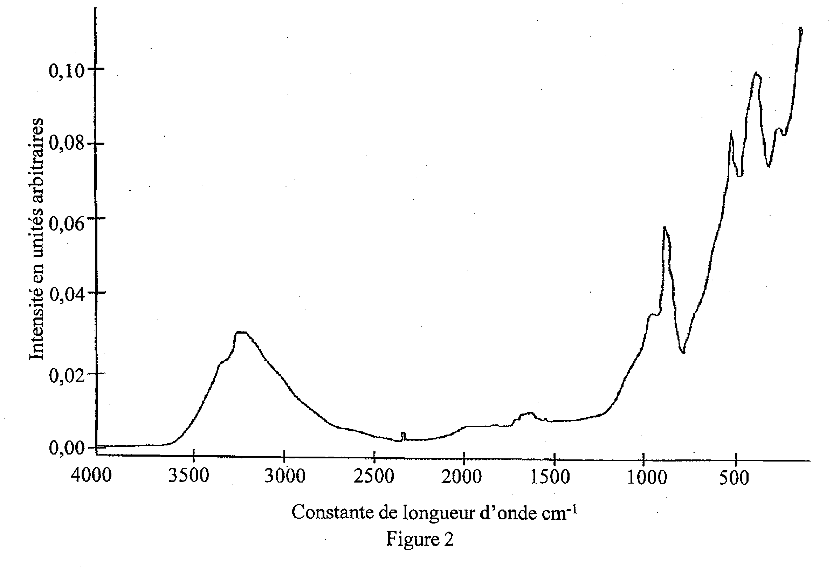

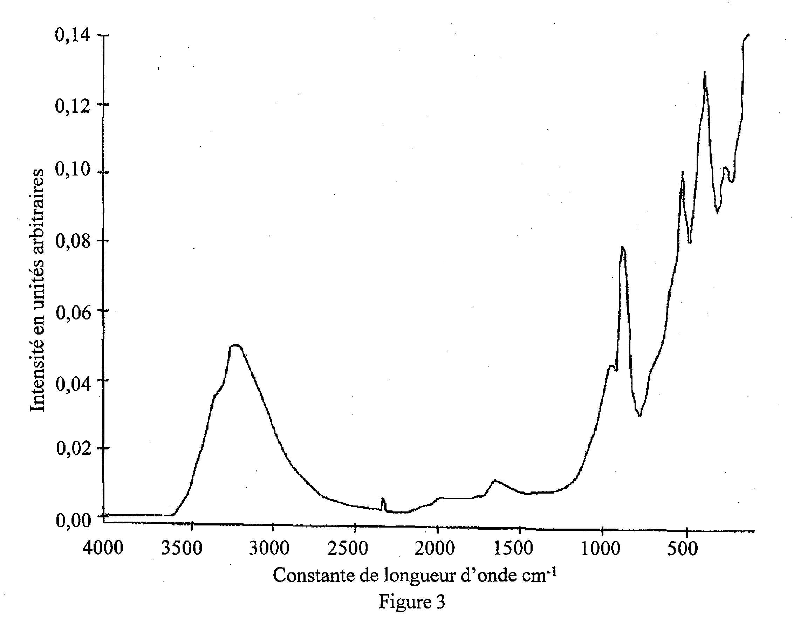

Les figures 1 à 3 annexées représentent les spectres Raman de trois polymères d'aluminosilicate utilisés dans l'invention. On voit sur ces figures que le spectre Raman des polymères d'aluminosilicate utilisés dans l'invention est bien caractérisé comme décrit précédemment.

Ainsi, les termes "polymère(s) d'aluminosilicate du type imogolite ou du type allophane purs" désignent dans le texte qui précède et qui suit les polymères d'aluminosilicate obtenus par le procédé décrit dans la demande de brevet français 2 802 912 ou par le procédé décrit dans la demande de brevet français 2 817 488, ou par le procédé décrit dans la demande de brevet français 2 842 514.

Les polymères d'aluminosilicate du type imogolite utilisés dans l'invention sont des nanotubes creux de 2 nm de diamètre et de plusieurs microns de longueur. Ils sont, comme on l'a déjà dit, obtenus par co-hydrolyse contrôlée de sels d'aluminium et d'alcoxydes de silicium. Cette hydrolyse est suivie d'un traitement thermique qui va permettre la croissance des filaments. Ces filaments vont ensuite être lavés et concentrés par ultrafiltration. La structure de ces polymères d'aluminosilicate du type imogolite est très particulière : l'extérieur du tube est recouvert d'Al-OH, alors que l'intérieur du tube est recouvert de Si-OH. Ainsi, l'eau reste indéfiniment piégée à l'intérieur du tube.

Les polymères d'aluminosilicate du type allophane utilisés dans l'invention sont des nanosphères creuses de 5 nm de diamètre également obtenues par co-hydrolyse contrôlée de sels d'aluminium et de silicium. Mais ici l'hydrolyse n'est pas suivie d'un traitement thermique, le principal paramètre permettant d'obtenir soit de l'imogolite, soit de l'allophane étant la concentration en sels d'aluminium. Ce polymère d'aluminosilicate du type allophane, comme le polymère d'aluminosilicate du type imogolite, est également recouvert d'Al-OH à l'extérieur et de Si-OH à l'intérieur. Egalement, dans ce polymère d'aluminosilicate du type du type allophane, le coeur de la particule est rempli d'eau.

Les polymères d'aluminosilicate du type imogolite et ceux du type du type allophane sont tous deux amorphes. Ils sont stables jusqu'à 300°C puis brusquement se décomposent en H₂O, Al₂O₃ et SiO₂.

EP-A-1544169 divulgue une méthode pour la stabilisation d'oxygène actif dans des aluminosilicates. L'oxygène actif est inclus dans l'aluminosilicate en forme d'anion superoxyde ou peroxyde. L'aluminosilicate utilisé dans les exemples est un aluminiosilicate de calcium avec une structure zéolitique.

Dans ce contexte, l'invention vise à fournir un agent de stabilisation, en milieu ouvert, c'est-à-dire à l'air, des ions peroxydes, pendant de très longues périodes de temps.

A cet effet, l'invention propose l'utilisation de particules d'un polymère d'aluminosilicate du type imogolite et/ou allophane en tant qu'agent de stabilisation à l'air des ions peroxydes, en particulier lorsque ceux-ci sont déposés sur un substrat.

L'invention propose également un procédé de stabilisation à l'air des ions peroxydes caractérisé en ce qu'il comprend les étapes suivantes :
a) préparation d'une suspension comprenant un solvant, des particules d'un polymère du type imogolite et/ou du type allophane et une source d'ions peroxydes, et éventuellement un liant, et
b) séchage.

Dans un mode de réalisation préféré, le procédé de l'invention comprend de plus, entre les étapes a) et b) une étape de dépôt de la suspension obtenue à l'étape a) sur au moins une surface d'un substrat.

Dans tous les modes de réalisation du procédé de l'invention, de préférence, la suspension comprend un rapport massique imogolite et/ou allophane / ions peroxydes compris entre 3 et 0,5 inclus.

Dans le mode de réalisation préféré du procédé de l'invention, on dépose entre 5 grammes et 340 grammes inclus de particules de polymères du type imogolite et/ou du type allophane par m² de surface de substrat.

Les quantités les plus importantes de dépôt sont particulièrement appropriées pour des applications en tant qu'agent antibactérien.

Dans tous les modes de réalisation du procédé de l'invention, de préférence, la source d'ions peroxydes est de l'eau oxygénée, et le solvant est de l'eau et peut éventuellement comprendre un liant organique filmogène qui peut être choisi parmi : l'alcool polyvinylique, l'hydroxypropylcellulose, les amidons et gélatines animales. On préfère l'alcool polyvinylique.

En effet, la présence d'un liant dans la dispersion peut être nécessaire pour maintenir la source d'ions peroxydes en place lorsque le solvant est l'eau.

Le rapport molaire liant organique/imogolite ou polymère d'allophane est choisi de telle manière que la couche soit mécaniquement solide. Dans le cas des échangeurs thermiques, le rapport molaire sera typiquement entre 0,5 et 1 inclus) et très inférieur à 1. Il peut ne pas y avoir de liant dans le cas où aucune solidité mécanique n'est demandée, comme dans le cas de la polymérisation des oléfines insaturées. On pourra également ajouter une charge minérale qui participera à la formation de la couche telle que de la silice colloïdale, de la silice pyrogenée, de l'alumine ou des argiles (kaolin). Ces charges ne participent qu'à la formation de la couche et n'ont pas d'effet sur la couche. Enfin, le liant pourra être réticulé par ajout de borax ou de formol de façon à conférer une robustesse à la couche.

L'invention propose encore un substrat caractérisé en ce qu'il comprend au moins une surface revêtue d'une couche comprenant des particules d'un polymère du type imogolite et/ou du type allophane et une source d'ions peroxydes.

De préférence, ladite couche comprend entre 5 et 340 grammes bornes incluses, de particules d'un polymère du type imogolite et/ou du type allophane par m².

Egalement de préférence, ladite couche comprend un rapport polymère du type imogolite et/ou allophane / ions peroxydes compris entre 3 et 0,5 bornes incluses.

Dans un mode de réalisation préféré, le substrat selon l'invention comprend de plus, sur la couche comprenant des particules d'un polymère du type imogolite et/ou du type allophane et une source d'ions peroxydes, une couche d'huile siccative, de préférence d'huile de lin ou tout autre polyoléfine insaturée d'origine naturelle ou synthétique.

L'invention propose aussi un dispositif caractérisé en ce qu'il comprend au moins un substrat selon l'invention ou obtenu par la mise en oeuvre du procédé ou l'utilisation selon l'invention.

L'invention propose enfin un échangeur thermique caractérisé en ce qu'il comprend au moins un substrat selon l'invention ou obtenu par la mise en oeuvre du procédé ou l'utilisation de l'invention.

L'invention sera mieux comprise et d'autres détails et avantages de celle-ci apparaitront plus clairement à la lecture de la description explicative qui suit.

L'invention vise à stabiliser des ions peroxydes à la surface d'un matériau, matériau qui pourra alors être séché et conservé à température ambiante et en équilibre avec l'humidité ambiante pendant de très longues durées, de jusqu'à plusieurs années.

Les ions peroxydes ainsi stabilisés restent disponibles pour mener à bien des réactions d'oxydation, en particulier l'oxydation des bactéries ou pour des réactions d'oxydation de double liaison de polyoléfines insaturées.

En effet, les oléfines insaturées participent à la formation des doubles membranes des bactéries et autres micro-organismes, cette oxydation inhibe la formation de biofilms à la surface de la couche formée.

En effet, les inventeurs ont découvert que les polymères d'aluminosilicate du type imogolite ou du type allophane, en particulier ceux d'origine synthétique ou non-naturels pris soit seuls soit en combinaison l'un avec l'autre, sont des matériaux particulièrement adaptés pour stabiliser des ions peroxydes à leur surface.

Cela est dû au fait que les polymères d'aluminosilicate sont des objets creux mais pas vides.

Ils sont d'abord remplis des eaux mères du milieu de synthèse, puis lors des étapes de lavage-purification, ils se remplissent d'eau déionisée.

Ils constituent donc des nano réservoirs d'eau.

Une autre caractéristique structurale importante de ce type de polymère d'aluminosilicate est leur anisotropie chimique.

En effet, leur surface extérieure est recouverte de groupes aluminol : Al-OH tandis que la surface intérieure est recouverte de groupe silanol : Si-OH.

Ils ont donc une surface externe de type basique et une surface interne de type acide.

L'imprégnation de ce type d'aluminosilicate par une source d'ions peroxydes liquide, en particulier aqueuse, conduira rapidement à l'échange de l'eau à l'intérieur des particules de polymères d'aluminosilicate par la source d'ions peroxydes liquide.

Les particules de polymères d'aluminosilicate du type imogolite ou allophane constituent alors des nano-réservoirs d'ions peroxydes.

Le caractère très acide des surfaces recouvertes de groupes silanol participe à la stabilisation de ces ions peroxydes.

Ces particules peuvent alors être utilisées de toute façon qui apparaîtra appropriée à l'homme de l'art, soit en tant que telle, soit déposées à la surface du matériau à traiter par les ions peroxydes.

Dans ce cas, le dépôt séchera à la surface du matériau à traiter, mais les réservoirs « réservoirs d'ions peroxydes » resteront pleins d'eau et donc d'ions peroxydes.

En effet, les expériences menées par les inventeurs ont montré que ces réservoirs se vidaient à des températures supérieures à 200°C.

Ainsi, un premier objet de l'invention est l'utilisation de particules d'un polymère du type imogolite ou du type allophane, seul ou en combinaison l'un avec l'autre en tant qu'agent stabilisant à l'air des ions peroxydes, ces particules de polymères d'aluminosilicate étant alors ensuite déposées ou non sur un substrat.

Par particules, on entend par nanoparticules telles que définies ci-dessus, c'est-à-dire pour les imogolites, des particules tubulaires creuses d'environ 2 nm de diamètre et d'une longueur de 500 nm à 1 µm, et des sphères creuses pour les polymères du type allophanes ayant un diamètre de 5 nm avec de 4 à 6 pores de 0,7 nm de diamètre à la surface.

La quantité d'ions peroxydes pouvant être contenue sur ces particules de polymères du type aluminosilicate utilisés dans l'invention dépend, bien entendu, de la source d'ions peroxydes.

Cependant, d'une manière générale, on peut introduire un rapport massique polymère d'aluminosilicate du type imogolite et/ou allophane sur ions peroxydes compris entre 3 et 0,5 bornes incluses.

En tant que source d'ions peroxydes, on peut utiliser de l'eau oxygénée, de préférence de l'eau oxygénée car elle s'échangera plus facilement avec l'eau contenue dans les pores des particules du polymère d'aluminosilicate du type imogolite et/ou allophane.

L'invention propose également un procédé de stabilisation à l'air des ions peroxydes qui comprend une première étape de mise en suspension de particules d'un polymère d'aluminosilicate du type imogolite et/ou allophane de préférence en les rapports indiqués ci-dessus, dans un solvant et une source d'ions peroxydes, puis, l'évaporation du solvant.

Le solvant peut être choisi parmi tout solvant de la source d'ions peroxydes compatible avec la source d'ions peroxydes, qui ne dissoudra pas ou ne détériorera pas les particules du polymère d'aluminosilicate du type imogolite et/ou allophane. En particulier le solvant est de l'eau, éventuellement un mélange eau/alcool.

Dans un mode de réalisation préféré du procédé de stabilisation à l'air des ions peroxydes, après la mise en suspension des particules de polymère du type imogolite et/ou allophane et de la source d'ions peroxydes dans le solvant, et avant séchage, on dépose la suspension sur au moins une surface d'un substrat.

Dans ce cas, de préférence le solvant comprend également un liant organique, de préférence hydrosoluble, filmogène, c'est-à-dire formant un film lors de l'évaporation du solvant.

Un exemple d'un tel liant organique hydrosoluble est l'alcool polyvinylique (PVA).

De préférence, dans ce mode de mise en oeuvre du procédé de l'invention, on dépose entre 5 et 340 grammes inclus de particules d'imogolite et/ou d'allophane chargées en source d'ions peroxydes par m² de surface recouverte.

En général, le solvant est l'eau. Mais pour la formation de films bactériostatiques qui vont devoir présenter une stabilité mécanique sur plusieurs années mais qui seront obtenus par le dépôt d'une solution aqueuse contenant un liant organique hydrosoluble, un polymère d'imogolite et/ou d'allophane contenant des ions peroxydes et des additifs chimiques destinés à consolider la couche après séchages (agents réticulants) et éventuellement une autre charge minérale « neutre ». En contraste, pour la polymérisation « centrifuge » (de l'intérieur vers l'extérieur) d'oléfines insaturées, il n'est pas nécessaire d'avoir une tenue mécanique particulière des nano-réservoirs d'ions peroxydes, un sol colloïdal aqueux d'un polymère d'allophane et/ou d'imogolite contenant des ions peroxydes est suffisant. Le substrat est ensuite séché pour évaporer le solvant, et imprégné des oléfines insaturées à polymériser.

Le substrat obtenu par l'utilisation selon l'invention ou le procédé selon l'invention comprend donc au moins une surface revêtue d'une couche comprenant des particules d'un polymère d'aluminosilicate du type imogolite et/ou allophane et une source d'ions peroxydes.

Les ions peroxydes sont conservés et stabilisés, même à l'air, sur ce substrat.

Par stabilisation à l'air, on entend stabilisation à l'air libre, c'est-à-dire en milieu ouvert.

De préférence, la quantité par m² de surface recouverte du substrat de particules d'un polymère d'aluminosilicate du type imogolite et/ou allophane servant de réservoir aux ions peroxydes est comprise entre 5 et 340 grammes inclus.

Plus précisément, le rapport massique polymère d'aluminosilicate du type imogolite et/ou allophane sur l'ion peroxyde, de la couche dont est revêtue la au moins une surface du substrat est compris entre 3 et 0,5.

Le substrat peut être par exemple, une surface à vernir, en particulier lorsque le vernis est une huile de lin.

Les ions peroxydes serviront alors à la polymérisation de l'huile de lin ou de toute autre huile siccative telles que les oléfines aliphatiques naturelles ou synthétiques. En tant qu'huiles siccatives naturelles, on citera les huiles naturelles constituées majoritairement d'acide α-linolénique, ou d'acide linoléique ou encore d'acide oléique ou d'un mélange de ces trois acides.

En effet, l'huile de lin est une polyoléfine qui contient des centres d'insaturation.

La formation des vernis impose d'oxyder ces doubles liaisons.

L'huile de lin et les autres huiles naturelles du même type vont être amenées à remplacer les polymères issus du pétrole qui non seulement sont toxiques mais encore ne sont pas en accord avec les politiques de développement durable mises en place dans les pays industrialisés.

Ainsi, dans un délai assez court, dans les traitements et la stabilisation, par exemple, par du bois, les huiles siccatives remplaceront les vernis actuellement utilisé sur ce segment de marché.

Cependant, il est difficile de contrôler la polymérisation des huiles siccatives surtout pour obtenir des revêtements épais, car l'oxygène de l'air qui est l'oxydant principal a du mal à diffuser à coeur conduisant à des polymérisations inhomogènes entre la surface du vernis et le coeur du vernis.

Ainsi, grâce à l'invention, la surface à vernir est traitée préalablement avec la suspension de polymères d'aluminosilicate du type allophane et/ou imogolite chargés en ions peroxydes, puis séchées, par exemple par étuvage, puis imprégnée d'huile siccative.

Les ions peroxydes contenus dans les nano réservoirs du polymère d'aluminosilicate du type allophane et/ou imogolite diffusera alors de l'intérieur vers l'extérieur pour participer à la polymérisation de l'huile alors que la surface du vernis sera elle oxydée par l'air.

La polymérisation est alors homogène sans qu'il soit nécessaire d'ajouter à l'huile des produits dangereux tels que des peracides ou sels de plombs.

Les huiles siccatives polymérisées sont extrêmement résistantes, elles étaient utilisées comme vernis à l'époque de la Renaissance.

Elles sont très stables à la lumière.

Elles peuvent également être utilisées dans l'emballage, pour conférer une protection à l'humidité, de capteurs solaires.

Ainsi, l'invention propose également un substrat caractérisé en ce qu'il comprend au moins une surface revêtue d'une couche comprenant des particules d'un polymère d'aluminosilicate du type allophane et/ou imogolite, et une source d'ions peroxydes, cette couche étant elle-même revêtue d'une couche d'huile siccative, de préférence d'huile de lin.

Dans ces applications, les polymères d'imogolite et/ou d'allophane peuvent être des polymères d'imogolite et/ou d'allophane naturels ou synthétiques qui ne sont pas de haute pureté.

Mais l'agent de stabilisation à l'air de l'invention peut également être utilisé pour former des surfaces bactériostatiques à longue durée de vie.

En effet, maintenir une surface libre de tous microorganismes est un challenge très difficile à tenir sans utiliser des mélanges de biocides plus ou moins toxiques pour les manipulateurs et les utilisateurs ou sans utiliser de composés coûteux tels que les sels d'argent.

En particulier, dans le domaine des échangeurs thermiques, quand une paroi subit une prolifération de microorganismes tels que des bactéries, des levures, des moisissures, voire cyanobactéries, ces dernières vont isoler les parois de l'échangeur côté air, et les performances thermiques vont diminuer.

De plus, les bactéries et autres microorganismes vont se décomposer et générer des pollutions olfactives, comme le cas des climatiseurs, voire également vont participer à la dégradation du métal par corrosion bactérienne.

Or, les microorganismes sont très sensibles à la présence d'ions peroxydes car ils sont incapables de croître sur des surfaces portant de telles fonctions chimiques, les radicaux peroxydes oxydant les doubles liaisons des acides gras formant leurs membranes.

Ainsi, grâce au procédé de l'invention, un dépôt par vaporisation, trempage, peinture de particules d'un polymère d'aluminosilicate du type imogolite et/ou allophane chargé d'ions peroxydes à la surface de l'échangeur devrait permettre de contrôler la croissance des microorganismes sur de longues périodes de temps.

Ce dépôt peut être utilisé pour la climatisation automobile et l'assainissement de l'air.

Ainsi, l'invention propose également un dispositif qui comprend au moins un substrat lui-même comprenant au moins une surface revêtue d'une couche comprenant des particules d'un polymère du type imogolite et/ou allophane et une source d'ions peroxydes.

Ce dispositif est en particulier un échangeur thermique.

Dans ces applications, les polymères d'imogolite et/ou d'allophane utilisés sont purs.

Afin de mieux faire comprendre l'invention, on va maintenant en décrire, à titre d'exemple purement illustratif et non limitatif des exemples de mise en oeuvre.

Dans le but de démontrer la capacité unique des polymères d'aluminosilicate du type imogolite et/ou du type allophane à stocker sur de très longues durées les radicaux peroxydes sur des films sec, le protocole suivant a été utilisé.

Il est connu qu'en présence d'eau oxygénée et d'amidons ou de composés d'amidons, les ions iodures sont oxydés en iode.

Cette réaction entraîne une forte coloration jaune orange.

Cette oxydation n'a lieu qu'en présence de peroxyde d'hydrogène.

Des couches minces ont donc été fabriquées à partir d'une suspension aqueuse contenant quatre types différents d'aluminosilicates :
1) polymère d'aluminosilicate du type imogolite pur,
2) polymère d'aluminosilicate du type allophane pur,
3) mélange de silice d'alumine en un rapport Al/Si=2,
4) halloysites. Les halloysites sont des particules creuses d'aluminosilicates ayant un rapport molaire Al/Si=2, commercialisés par la société Aldrich.

La suspension contient de plus un liant hydrosoluble de façon à obtenir des couches mécaniquement stables et non fracturées sur de longues périodes de temps.

Dans les exemples qui suivent, ce liant est soit de la gélatine, soit de l'alcool polyvinylique (PVA).

La suspension contient de plus de la cyclodextrine en tant que dérivé d'amidon et de l'eau oxygénée à 30% volume.

Le rapport entre les différents constituants dans les exemples qui suivent est identique.

Les couches ont été fabriquées par trempage ou par dépôt direct de gouttes sur des plaques de microscopes et le séchage a été effectué à température ambiante et à l'air pendant deux jours.

Après deux jours de séchage, on dépose sur la couche sèche, en équilibre avec la vapeur d'eau ambiante, une goutte d'une solution aqueuse d'iodure de sodium (2% massique).

Si la couche mince contient des ions peroxydes disponibles, elle deviendra orange foncée.

Les expériences sont répétées pendant cinq semaines sur des couches conservées dans les mêmes conditions.

### EXEMPLE 1 :

A une solution de 75ml d'un polymère d'allophane pur (9,6 g/l en Al +Si), on ajoute 3,12 g de PVA (PVA 4-88; M_{w} ∼ 31 000; [CAS: 9002-89-5]; Lot: 454841/2; Fluka), 1 g de β-cyclodextrine (origine :Aldrich) et 3ml de H2O2 30% volumique. Le rapport massique allophane/ions peroxyde est de 0,7. Ce milieu réactionnel est chauffé pour dissoudre l'alcool polyvinylique. 5 plaques de verre sont enduites, puis stockées et séchées à température ambiante et à un taux d'humidité relative de 50%. 113g de polymère d'allophane "chargés en ions peroxyde » par m² de surface de la plaque de verre ont été déposés.

### EXEMPLE 2 (comparatif):

A 75ml d'une solution de PVA (PVA 4-88; M_{w} ∼ 31 000; [CAS: 9002-89-5]; Lot: 454841/2; Fluka) à 4% massique, on ajoute 1g de β-cyclodextrine et 3ml de H2O2 à 30%vol. Une série de 5 plaques de verre est enduite, puis stockée et séchée à température ambiante et à un taux d'humidité relative de 50%.

Ces plaques sont des blancs qui montrent la difficulté de conserver des ions peroxydes dans une couche séchée à l'air.

### EXEMPLE 3

On a procédé comme à l'exemple 1 mais le liant hydrosoluble est de la gélatine (Gelatin from bovine skin, Type B; [CAS: 9000-70-8]; Batch: 115K0144; Sigma-Aldrich). Le rapport massique charge minérale /liant est de 0, 24.

Cet exemple montre que la nature du liant organique n'explique pas les phénomènes de stockage et stabilisation observés des ions peroxydes.

### EXEMPLE 4

On a procédé comme à l'exemple 1 mais dans ce cas on n'ajoute pas de β-cyclodextrine. Une série de 5 plaques de verre est enduite, puis stockée et séchée à température ambiante et à un taux d'humidité relative de 50%.

La présence d'ions peroxydes est révélée par l'ajout sur les plaques de verres d'une solution contenant à la fois les ions iodures et la β-cyclodextrine.

Cet exemple a été effectué pour vérifier que les effets de stabilisation observés des peroxydes n'étaient pas dus à une interaction particulière des allophanes avec la β-cyclodextrine.

### EXEMPLE 5 (comparatif)

On prépare 75ml d'une suspension colloïdale contenant des nanoparticules de silice et d'alumine (LUDOX® CL colloidal silica 30 wt. % suspension in H2O; [CAS: 7631-86-9]; Batch: 13701KE; Sigma-Aldrich) et de nanoparticules d'Al2O3,( Aluminium oxide, NanoTek® AL-6050, 23% in H2O, colloidal dispersion; [CAS: 1344-28-1]; Lot: 1107896; ABCR), le rapport molaire Al/Si de la dispersion de nanoparticules est de 2 et le pH de la suspension colloïdal est de 4,16 (similaire au pH de la suspension d'allophane et/ou d'imogolite), à cette suspension on ajoute 3,12g de PVA (PVA 4-88; M_{w} ∼ 31 000; [CAS: 9002-89-5]; Lot: 454841/2; Fluka), le rapport massique de la charge minérale/liant est de 0,24. On ajoute ensuite un 1g de β-cyclodextrine et 3 ml d'H2O2 à 30% volumique. Le milieu réactionnel est chauffé pour solubiliser totalement le PVA puis enduit sur des plaques de verre. 5 plaques de verre sont enduites, puis stockées et séchées à température ambiante et à un taux d'humidité relative de 50%.

L'exemple 5 a pour but de montrer que le fait d'avoir des nanoparticules de silice ou d'alumine n'explique pas les phénomènes observés.

### EXEMPLE 6

On prépare 75ml d'une suspension colloïdale d' Halloysite (0,75g), les halloysites sont des nanoparticules creuses d'aluminosilicate présentant un rapport molaire Al/Si =1, vendu par Aldrich), le titre massique en nanoparticules étant identique au titre massique en allophane de l'exemple 1 et le rapport charge minérale/liant organique étant de 0,24. Pour ce faire, on ajoute ensuite 3,12 g de PVA (PVA 4-88; M_{w} ∼ 31 000; [CAS: 9002-89-5]; Lot: 454841/2; Fluka), 1 g de β-cyclodextrine (origine :Aldrich), 1 g de β-cyclodextrine et 3ml d'H2O2 30% volumique. Le milieu réactionnel est chauffé pour solubiliser l'alcool polyvinylique.

5 plaques de verre sont enduites, puis stockées et séchées à température ambiante et à un taux d'humidité relative de 50%.

Le but de cet exemple est de montrer que le fait que la charge soit un aluminosilicate et que les nanoparticules soient des objets creux n'explique pas les propriétés observées.

### EXEMPLE 7

A une solution de 75ml de polymère d'imogolite pur (27,9 g/l en Al +Si), on ajoute 3,12 g d'alcool polyvinylique (PVA 4-88; M_{w} ∼ 31 000; [CAS: 9002-89-5]; Lot: 454841/2; Fluka), 1 g -cyclodextrinebde (origine :Aldrich) et 3ml de H2O2 30% volumique. Le rapport massique imogolite/ions peroxyde est de 2. Ce milieu réactionnel est chauffé pour dissoudre l'alcool polyvinylique. 5 plaques de verre sont enduites, et séchées puis stockées à température et à un taux d'humidité relative de 50%. 330g/m² de surface de la plaque de polymère d'imogolite chargés en ions peroxyde pur ont été déposés

Cet exemple montre l'efficacité des polymères d'aluminosilicate du type imogolite pour le stockage et la stabilisation des ions peroxydes.

### EXEMPLE 8 : Résultats

Le tableau suivant regroupe les résultats des expériences des exemples 1 à 7.

| Expériences | Semaine 1 | Semaine 2 | Semaine 3 | Semaine 4 | Semaine 5 |
|---|---|---|---|---|---|
| Exp1 | 1 | 1 | 1 | 1 | 1 |
| Exp2 | 4 | 4 | 4 | 4 | 4 |
| Exp3 | 2 | 2 | 2 | 2 | 2 |
| Exp4 | 1 | 1 | 1 | 2 | 2 |
| Exp5 | 2 | 3 | 4 | 4 | 4 |
| Exp6 | 1 | 3 | 4 | 4 | 4 |
| Exp7 | 1 | 1 | 1 | 1 | 1 |

La semaine 1 est le temps 0, c'est-à-dire que les enductions ont 2 jours de séchage à température et à un taux d'humidité relative de 50%.

Pour les autres semaines, il ya un incrément de vieillissement de 1 semaine entre chaque essai.

Dans ce tableau, La notation 1 correspond à une forte coloration.

Cette forte coloration témoigne de la présence d'une importante quantité d'ions peroxydes disponibles.

L'exemple 2 après 5 semaines correspond à une notation 4 sur le tableau.

Les notes de 1 à 4 du tableau correspondent donc à un ordre décroissant de coloration et donc de la quantité d'ions peroxydes encore présents dans l'enduction « sèche ».

Les exemples 1,3 et 4 correspondent aux exemples de l'invention.

On voit qu'après 5 semaines de séchage, les ions peroxydes sont encore présents.

La nature du liant n'a que peu d'effets. Les ions peroxydes sont assez mobiles pour aller réagir dans le système β-cyclodextrine et NaI (exemple 4).

L'exemple 2 montre qu'après 2 jours de séchage dans une couche composée de PVA, il n'y plus d'ions peroxydes disponibles.

Les exemples 4 et 5 montrent que les couches ne sont pas totalement sèches après 2 jours de séchage à l'air et qu'ils restent des peroxydes disponibles, cependant 15 jours plus tard, il n'y a plus de peroxydes. Donc l'effet de stabilisation et de stockage des peroxydes n'est pas dû à la présence d'une charge minérale, l'effet de stockage n'est pas dû à la nature de type aluminosilicate de l'allophane et/ou de l'imogolite et l'effet de ce stockage n'est également pas dû uniquement au caractère creux des nanoparticules de type allophane ou imogolite, les halloysites étant des aluminosilicates creux.

## Revendications

1. Utilisation de particules d'un polymère d'aluminosilicate du type imogolite et/ou allophane en tant qu'agent de stabilisation à l'air des ions peroxydes.

2. Utilisation de particules de polymères du type imogolite et/ou du type allophane pour la stabilisation à l'air des ions peroxydes déposés sur un substrat.

3. Procédé de stabilisation à l'air des ions peroxydes **caractérisé en ce qu'**il comprend les étapes suivantes :
a) préparation d'une suspension comprenant un solvant, des particules de polymères du type imogolite et/ou du type allophane et une source d'ions peroxydes, et éventuellement un liant, et
b) séchage.

4. Procédé selon la revendication 3 **caractérisé en ce qu'**il comprend, entre les étapes a) et b) une étape de dépôt de la suspension obtenue à l'étape a) sur au moins une surface d'un substrat.

5. Procédé selon la revendication 3 ou 4 **caractérisé en ce que** la suspension comprend un rapport massique imogolite et/ou allophane / ions peroxydes compris entre 3 et 0,5 inclus.

6. Procédé selon la revendication 4 **caractérisé en ce que** l'on dépose entre 5 grammes et 340 grammes inclus de particules de polymères du type imogolite et/ou du type allophane par m² de surface de substrat.

7. Procédé selon l'une quelconque des revendications 3 à 6 **caractérisé en ce que** la source d'ions peroxydes est de l'eau oxygénée.

8. Procédé selon l'une quelconque des revendications 3 à 7 **caractérisé en ce que** le solvant est de l'eau et le liant est l'alcool polyvinylique.

9. Substrat **caractérisé en ce qu'**il comprend au moins une surface revêtue d'une couche comprenant des particules de polymères du type imogolite et/ou du type allophane et une source d'ions peroxydes.

10. Substrat selon la revendication 9 **caractérisé en ce que** ladite couche comprend entre 5 et 340 grammes de particules de polymères du type imogolite et/ou du type allophane par m².

11. Substrat selon la revendication 9 ou 10 **caractérisé en ce que** ladite couche comprend un rapport massique imogolite et/ou allophane / ions peroxydes compris entre 3 et 0,5.

12. Substrat selon l'une quelconque des revendications 9 à 11 **caractérisé en ce qu'**il comprend de plus, sur la couche comprenant des particules de polymères du type imogolite et/ou du type allophane et une source d'ions peroxydes, une couche d'huile siccative, de préférence d'huile de lin.

13. Dispositif **caractérisé en ce qu'**il comprend au moins un substrat selon l'une quelconque des revendications 9 à 12.

14. Echangeur thermique **caractérisé en ce qu'**il comprend au moins un substrat selon l'une quelconque des revendications 9 à 12 ou obtenu par la mise en oeuvre du procédé selon l'une quelconque des revendications 4 à 8 ou l'utilisation selon la revendication 2.

## Patentansprüche

1. Verwendung von Partikeln eines Aluminosilicat-Polymers des Typs Imogolit und/oder Allophan als Stabilisierungsmittel von Peroxidionen gegenüber Luft.

2. Verwendung von Polymerpartikeln des Typs Imogolit und/oder des Typs Allophan für die Stabilisierung von Peroxidionen gegenüber Luft, die auf einem Substrat abgeschieden sind.

3. Verfahren zur Stabilisierung von Peroxidionen gegenüber Luft, **dadurch gekennzeichnet, dass** es die folgenden Stufen umfasst:
a) Herstellung einer Suspension, die ein Lösungsmittel, Polymerpartikel des Typs Imogolit und/oder des Typs Allophan und eine Quelle für Peroxidionen und gegebenenfalls ein Bindemittel umfasst, und
b) Trocknung.

4. Verfahren nach Anspruch 3, **dadurch gekennzeichnet, dass** es zwischen den Stufen a) und b) eine Stufe der Abscheidung der in Stufe a) erhaltenen Suspension auf wenigstens einer Oberfläche eines Substrats umfasst.

5. Verfahren nach Anspruch 3 oder 4, **dadurch gekennzeichnet, dass** die Suspension ein Massenverhältnis Imogolit und/oder Allophan/Peroxidionen von zwischen 3 und 0,5, einschließlich, umfasst.

6. Verfahren nach Anspruch 4, **dadurch gekennzeichnet, dass** man zwischen 5 Gramm und 340 Gramm, einschließlich, Polymerpartikel des Typs Imogolit und/oder des Typs Allophan pro m² Substratoberfläche abscheidet.

7. Verfahren nach einem der Ansprüche 3 bis 6, **dadurch gekennzeichnet, dass** die Quelle für Peroxidionen oxygeniertes Wasser ist.

8. Verfahren nach einem der Ansprüche 3 bis 7, **dadurch gekennzeichnet, dass** das Lösungsmittel Wasser ist und das Bindemittel Polyvinylalkohol ist.

9. Substrat, **dadurch gekennzeichnet, dass** es wenigstens eine Oberfläche umfasst, die mit einer Schicht überzogen ist, die Polymerpartikel des Typs Imogolit und/oder des Typs Allophan und eine Quelle für Peroxidionen umfasst.

10. Substrat nach Anspruch 9, **dadurch gekennzeichnet, dass** die Schicht zwischen 5 und 340 Gramm Polymerpartikel des Typs Imogolit und/oder des Typs Allophan pro m² umfasst.

11. Substrat nach Anspruch 9 oder 10, **dadurch gekennzeichnet, dass** die Schicht ein Massenverhältnis Imogolit und/oder Allophan/Peroxidionen von zwischen 3 und 0,5 umfasst.

12. Substrat nach einem der Ansprüche 9 bis 11, **dadurch gekennzeichnet, dass** es darüber hinaus auf der Schicht, die Polymerpartikel des Typs Imogolit und/oder des Typs Allophan und eine Quelle für Peroxidionen umfasst, eine Schicht von trocknendem Öl, vorzugsweise Leinöl, umfasst.

13. Vorrichtung, die **dadurch gekennzeichnet ist, dass** sie wenigstens ein Substrat nach einem der Ansprüche 9 bis 12 umfasst.

14. Wärmetauscher, **dadurch gekennzeichnet, dass** er wenigstens ein Substrat nach einem der Ansprüche 9 bis 12 oder Erhalten durch Durchführung des Verfahrens nach einem der Ansprüche 4 bis 8 oder Verwendung nach Anspruch 2 umfasst.

## Claims

1. Use of particles of an aluminosilicate polymer of the imogolite and/or allophane type as an agent for stabilising peroxide ions against air.

2. Use of particles of polymers of the imogolite type and/or allophane type for stabilising peroxide ions deposited on a substrate against air.

3. Method of stabilising peroxide ions against air, **characterised in that** it comprises the following steps:
a) preparing a suspension comprising a solvent, particles of polymers of the imogolite type and/or allophane type, and a source of peroxide ions, and possibly a binder, and
b) drying.

4. Method according to claim 3, **characterised in that** it comprises, between steps a) and b), a step of depositing the suspension obtained in step a) on at least one surface of a substrate.

5. Method according to claim 3 or 4, **characterised in that** the suspension has a mass ratio of the imogolite and/or allophane to the peroxide ions of between 3:1 and 0.5:1 inclusive.

6. Method according to claim 4, **characterised in that** between 5 grams and 340 grams inclusive of particles of polymers of the imogolite type and/or allophane type is deposited per m² of substrate surface.

7. Method according to any one of claims 3 to 6, **characterised in that** the source of peroxide ions is hydrogen peroxide.

8. Method according to any one of claims 3 to 7, **characterised in that** the solvent is water and the binder is polyvinyl alcohol.

9. Substrate **characterised in that** it comprises at least one surface coated with a layer comprising particles of polymers of the imogolite type and/or allophane type and a source of peroxide ions.

10. Substrate according to claim 9, **characterised in that** said layer comprises between 5 and 340 grams of particles of polymers of the imogolite type and/or allophane type per m².

11. Substrate according to claim 9 or 10, **characterised in that** the said layer has a mass ratio of the imogolite and/or allophane to the peroxide ions of between 3:1 and 0.5:1.

12. Substrate according to any one of claims 9 to 11, **characterised in that** it further comprises, on the layer comprising particles of polymers of the imogolite type and/or allophane type and a source of peroxide ions, a layer of siccative oil, preferably linseed oil.

13. Device **characterised in that** it comprises at least one substrate according to any one of claims 9 to 12.

14. Heat exchanger **characterised in that** it comprises at least one substrate according to any one of claims 9 to 12 or obtained by carrying out the method according to any one of claims 4 to 8 or by the use according to claim 2.
